# EUROPEAN PATENT SPECIFICATION

(11) **EP 0 676 578 B1**
(45) Date of publication and mention of the grant of the patent: **26.04.2000**
(21) Application number: 95850034.0
(22) Date of filing: 13.02.1995
(51) Int. Cl.: F16L 55/124

(54) **Device for blocking the flow in pipes**
Vorrichtung zum Blockieren des Durchflusses in Rohren
Dispositif pour bloquer le flux dans des conduits

(30) Priority: 08.04.1994 SE 9401189
(43) Date of publication of application: 11.10.1995
(73) Proprietor: Tigerholm Aktiebolag, S-178 31 Ekerö (SE)
(72) Inventor: Tigerholm, Lars, S-161 52 Bromma (SE)

(56) References cited:
- WO-A-88/04386
- GB-A- 2 140 894
- GB-A- 2 270 729
- SE-B- 460 073

## Description

The present invention relates to a device for blocking a fluid in a pipe on which a hermetically sealed positioning unit is mounted and through which a hole is drilled in the pipe, with hermetic sealing preserved, enabling an expandable body to be inserted through the positioning unit, with the aid of a blocking implement, and through the drilled hole into the pipe for temporary blocking of the flow of fluid in the pipe, whereby the expandable body is supported during insertion and in the direction of fluid flow during expansion in the pipe by a support tube, inserted through the positioning unit, which encloses the blocking implement inserted through the positioning unit.

Prior art methods and devices for temporarily blocking the flow of fluid in a pressurised pipe with retained hermetic sealing are set forth in e.g. Swedish patents 8605208-1 and 9301793-7 in which an expandable body, in the form of a rubber balloon introduced into the pipe, is made to expand and block the pipe. In these instances, the rubber balloon is only kept in place by friction against the pipe's interior surface. This reduces the device's usefulness when the fluid has a high pressure and when there are pressure surges in the pipe system. They could easily cause the rubber balloon to slide inside the pipe and ultimately burst. Moreover, the interior surface of welded pipes is not always smooth and can have welding seams with sharp burrs easily capable of damaging a slipping balloon, causing the balloon to burst as a result. Another device for blocking pipes is known from GB 2140894 where a expandable bag is inserted downstream and is supported by a special iris-disc inserted in the tube trough a extra drilled hole and secured by secondary expandable bag which is supported by a hollow support column inserted in the tube after the secondary bag has been inserted and can not be used as a support during the insertion of the bag.

The object of the present invention is to achieve a device according to the patent claims which eliminate these shortcomings, allowing the use of existing blocking methods at much high pipe pressures than has hitherto been possible and displaying greater resistance to collapse of the expandable blocking body. This is achieved when a thin-walled tubular support, which encloses the blocking implement and its expandable body and whose lower part protrudes into the pipe, is inserted through the positioning unit, said lower part gradually forming a semicylinder whose opening faces the flow of fluid in the pipe. The lower part of the support tube, which when fully inserted into the pipe approaches the bottom of the pipe, supports the expanded expandable body so the body does not depend on friction between it and the interior wall of the pipe to keep it in position inside the pipe. This is particularly important in the blocking of heating pipes, as warm fluids tend to reduce friction between the pipe and the rubber balloon, and in the blocking of large diameter pipes in which the support tube permits greater expansion of the rubber balloon. So a given rubber balloon size, and even a given size for the hole drilled in the pipe, can be used for a plurality of pipe diameters, i.e. the required number of different sizes can be reduced. Practical trials have shown that the blocking method according to the invention is capable of withstanding pipe fluid pressures that 3 are to 5 times higher than in prior art blocking methods employing an expanded rubber balloon.

In order to further enhance the function of the support tube, especially with large diameter pipes, the lower part of the body is devised so it gradually forms a semicylindrical rod with its flat side facing the direction of fluid flow in the pipe and may be equipped with automatically lowered flaps which are movingly mounted on the flat side of the rod and which lower out to the side when the body touches the bottom of the pipe. In the corresponding manner, the flaps retract in towards the center of the rod when they touch the inner surface of the upper part of the pipe as the blocking implement is withdrawn from the pipe so as to permit the body's passage through the hole drilled in the pipe.

The device will be described in the patent claims and attached FIGURES in which FIGURE 1 shows a side view of the invention with the support tube mounted inside the positioning unit and with the blocking implement in its upper position before the expandable body is inserted into the pipe to be blocked. FIGURE 2 shows the same side view but after the expandable body has been inserted into the pipe. FIGURE 3 also shows a side view in which the expandable body has been expanded to block the pipe. FIGURE 4 is a schematic cross-section of the support tube and the flaps before the tube is inserted into the pipe. FIGURE 5 shows support tube with the flaps lowered after the tube has been inserted into the pipe.

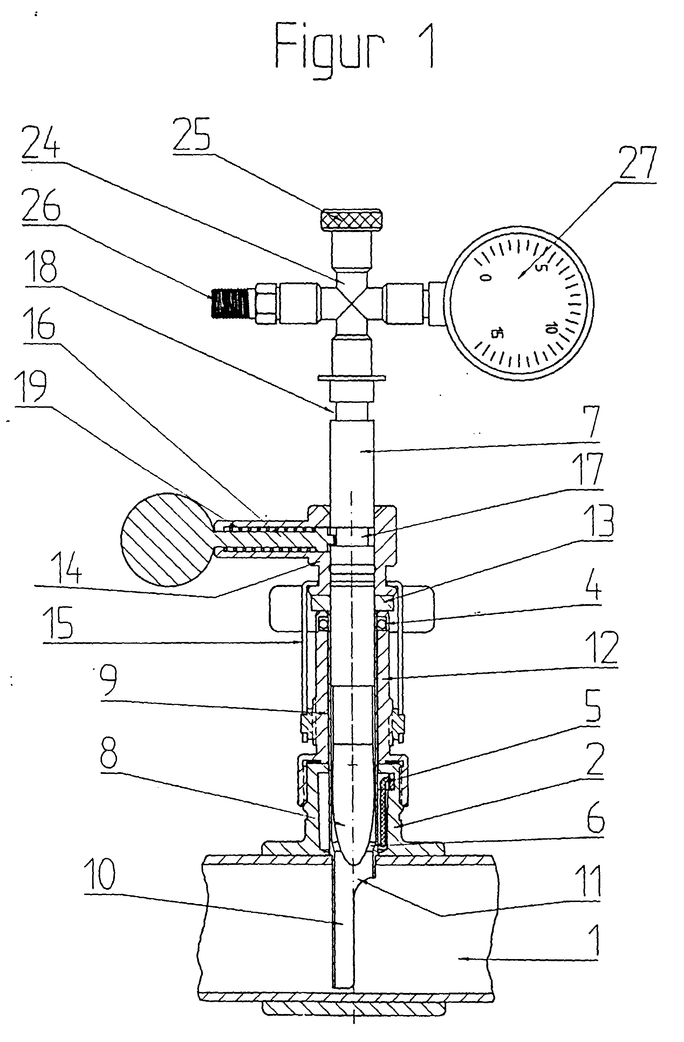

In FIGURE 1, 1 is the part of the pipe in which flow is to be blocked, 2 is a positioning unit which, with the aid of a threaded connector (not shown), is attached to the pipe so a hermetic seal is achieved. The positioning unit is equipped with a valve device 5, actuated by a drill or a support tube 9, and has a screwed-on extension part 12 which, at its uppermost end, has an internal sealing body 4 designed to seal against a drill or the support tube 9. The extension part is equipped with a rotatingly arranged locking clamp 15 which clamps a locking device 14 to the extension part. The locking device 14 comprises a spring-loaded 19 locking cylinder 16 whose locking pin affixes a blocking implement 7 by engaging the implement's notch 17 when the support tube 9 is inside the positioning unit 2 and extension part 12 and by engaging the notch 18 after the blocking implement with the expandable body 8 has been inserted into the pipe 1. The tubular support 9 consists of a thin-walled tube which is vertically displaceable inside the positioning unit's extension part and which is hermetically sealed by the sealing body 4. Its upper section has a collar 13 that fixes the support tube's position in relation to the extension part. The part of the support tube which protrudes into the pipe 1 gradually forms a semicylinder 10 whose opening 11 faces the direction of fluid flow in the pipe and is intended to serve as a support for the expandable body, especially in the expanded state, during the blocking of fluid flow in the pipe. The blocking implement 7 with the expandable body 8 is inserted into the support tube 9 with the locking device 14 whose locking pin is made to engage the notch in the blocking implement 17 inside the positioning unit 2 and the extension part 12 and affixed to it by the locking clamp 15, rotatingly attached to the extension part. In this position, the lower part 10 of the support tube is in its final position inside the pipe 1, whereas the expandable body 8 is inside the positioning unit's cavity 6.

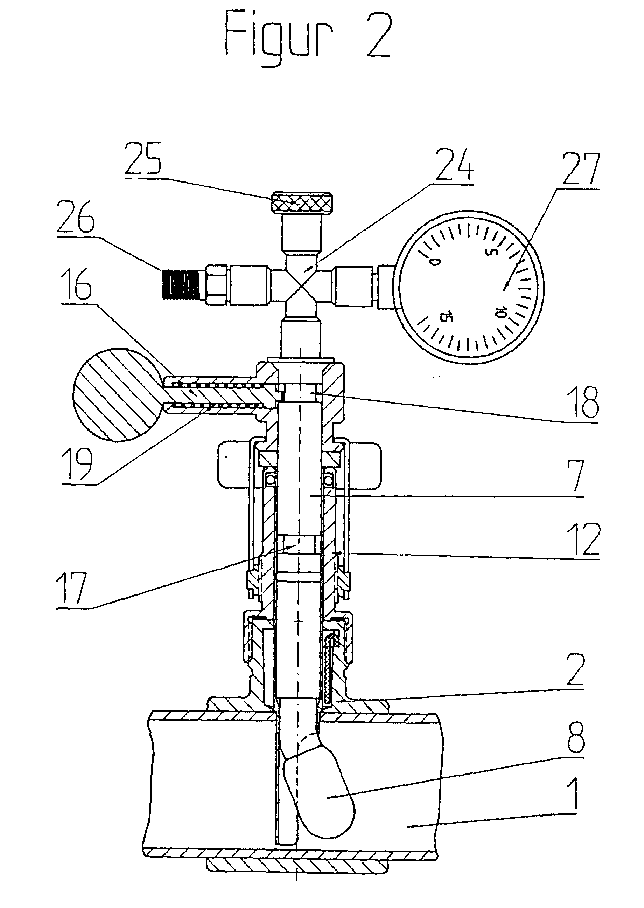

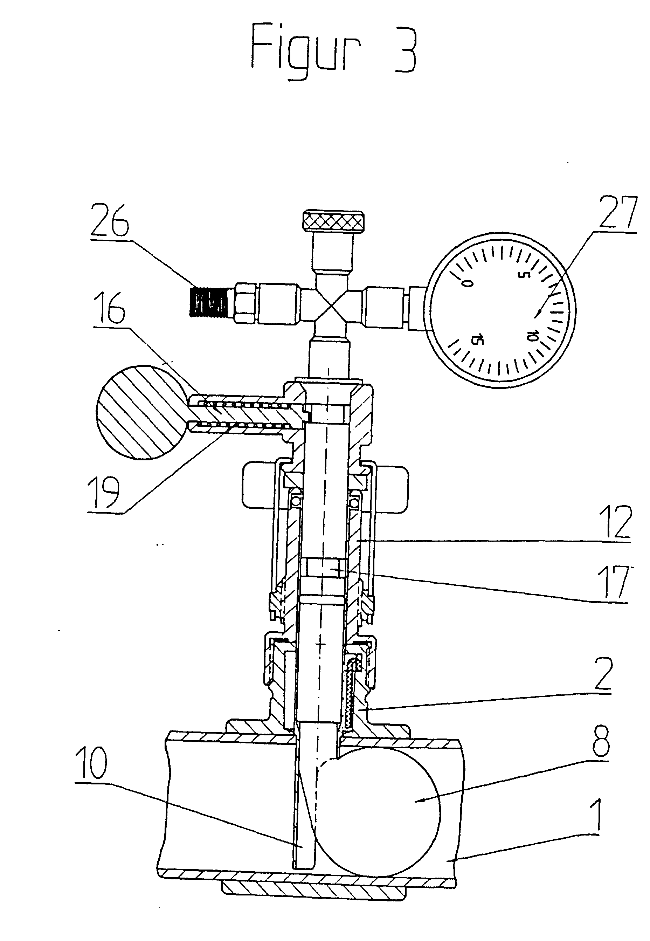

FIGURE 2 shows the position of the blocking implement after the locking cylinder 16 has been detached from the notch 17, and the implement with its expandable body has been pushed down into the pipe and locked in position when the locking cylinder is made to engage the notch 18. The upper end of the blocking implement has a multiconnection nipple 24 with a plugged connector 25, a connection for compressed air 26 and a connection or a pressure gauge 27. In FIG. 3 compressed air has been supplied through the connection 26 to expand the expandable body until sufficient pressure has been achieved, as shown on the pressure gauge 27. This blocks the pipe.

The blocking implement is removed in the corresponding manner after blocking. The compressed air is evacuated through the connection 26, the implement 7 is withdrawn until the locking cylinder engages the notch 17 and the support tube with the blocking implement is detached from the locking clamp and withdrawn from the positioning unit. The valve device 5 then automatically closes to prevent the leakage of fluid from the pipe 1.

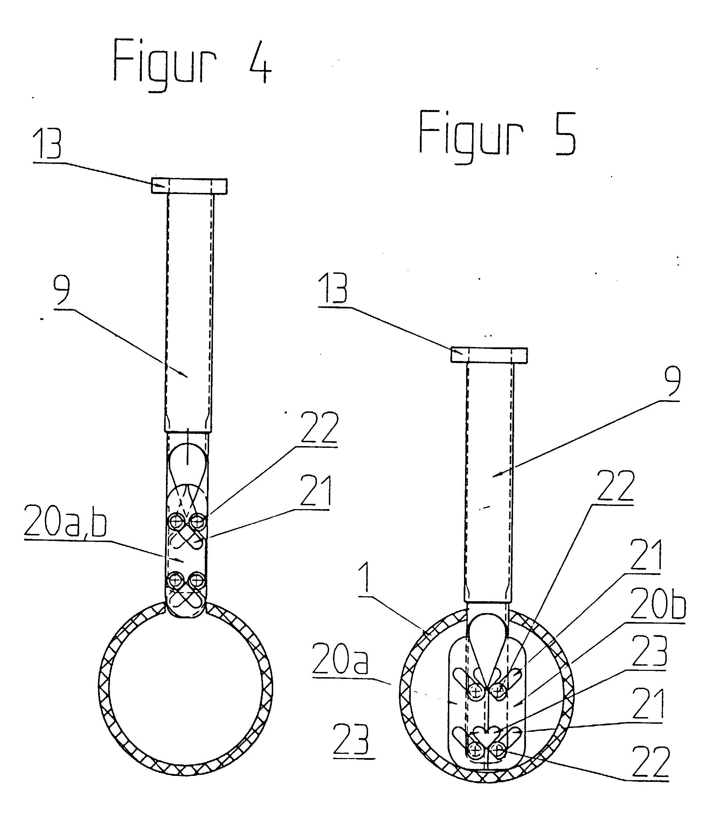

FIGURE 4 shows a schematic cross-section of the support tube 9, equipped with the automatically lowered and retracted flaps 20a and 20b, prior to insertion into the pipe 1. The flaps, which overlap each other here, are slidingly attached to the flat side of the support tube's rod by two head-equipped pins 22 which slide in slots 21, running at a 45° angle to the horizontal plane, in the flaps. Each flap is equipped with two recesses 23 to allow the passage of the respective flap's pin 22 when the flaps are moved to the retracted position in which they overlap each other. The lower end of the flaps 20a, 20b in the retracted position is at a greater distance below the lower end of the tubular support 9 than the distance representing the vertical height of the slots 21.

Finally, FIGURE 5 shows the device with the support tube fully inserted into the pipe 1. Here, the flaps have increased the area of support. Since the flaps 20a and 20b in the lowered position extend further down than the rod of the support tube, they are forced apart by the slanted slots during their passage down into the pipe, thereby increasing the area of support. In the corresponding manner, the flaps are forced together when the support tube is withdrawn from the pipe.

A broadening of the support tube's support section may be obtained by means of e.g. openable wings or hinged flaps.

## Claims

1. A device for temporarily arranging an expandable body (8) inside a pressurised pipe (1) containing a flowing fluid and comprising of a positioning unit (2) to be positioned on a pipe at the location at which the expandable body is to be arranged in such a way that a seal is created between the surface of the pipe and the positioning unit a positioning unit's extension part (12) being equipped with a sealing body (4) whose task is to hermetically seal a hole channel (3) of the extension part when a drill or a blocking implement (7) has been inserted into the channel and being further equipped with a valve device (5) openable by insertion,of a drill or a blocking implement (7), the valve device being automatically closed after removal of the drill or the blocking implement, the device including the blocking implement, characterised in that the blocking implement (7) with the attached expandable body 8 is enclosed in a tubular support (9) whose lower part gradually forms a semicylinder (10) whose opening, in operation, faces the flow of fluid in the pipe and serves as a support for the expandable body (8) when the body is inserted, with the aid of the blocking implement (7), through the tubular support (9) into the pipe (1), during subsequent expansion of the expandable body (8) and during the body's blocking of the flow of fluid.

2. A device of patent claim 1, characterised in that the tubular support (9) consists of a thin-walled tube which is vertically displaceable inside the positioning unit's extension section (12) and whose upper section has a collar (13) which fixes the support tube (9) in position in relation to the extension part (12) and which is clamped to the latter by a locking device (14) with the aid of a locking clamp (15) which is rotatingly attached to the extension part.

3. A device of patent claim 2, characterised in that the locking device (14) comprises a spring-loaded (19) locking cylinder (16), whose locking pin fixes the position of the blocking implement (7) by engaging its notch (17) when the support tube (9) is inside the positioning unit (2) and the extension section (12) and by engaging the recess (18) after the blocking implement with the expandable body (8) has been inserted into the pipe (1).

4. A device of patent claim 1, characterised in that the part of the tubular support (9) which protrudes into the pipe (1), is equipped with two laterally sliding flaps (20a and 20b) which slide individually in two slots (21) running at a 45° angle to the horizontal plane, each flap steered by two head-equipped pins (22) attached to the flat side of the rod, each flap (20a, 20b) being equipped with two recesses (23) to allow the passage of the respective flap's pin (22) when the flaps are moved to the retracted position in which they overlap each other.

5. A device of patent claim 4, characterised in that the lower end of the flaps (20a, 20b) in the retracted position is at a greater distance below the lower end of the tubular support (9) than the distance representing the vertical height of the slots (21).

## Patentansprüche

1. Vorrichtung zur zeitweiligen Anordnung eines expandierbaren Körpers (8) innerhalb eines unter Druck stehenden, ein fießendes Fluid enthaltenden Rohres (1), welches ein Positionierungsglied (2) zur Positionierung auf einem Rohr an der Stelle aufweist, an welcher der expandierbare Körper angeordnet werden soll, dergestalt, daß eine Dichtung zwischen der Oberfläche des Rohres und dem Positionierungsglied erzeugt wird, wobei ein Verlängerungsabschnitt (12) des Positionierungsgliedes, der mit einer Dichtungsvorrichtung (4) versehen ist, deren Aufgabe es ist, einen Lochkanal (3) des Verlängerungsabschnitts hermetisch abzudichten, wenn ein Bohrer oder ein Absperrelement (7) in den Kanal eingefügt wurde, und der weiter mit einer Ventilvorrichtung (5) versehen ist, die durch Einführen des Bohrers oder des Absperrelements (7) geöffnet werden können, wobei die Ventilvorrichtung, die das Absperrelement enthält, automatisch nach Entfernen des Bohrers oder des Absperrelements schließt, **dadurch gekennzeichnet,** daß das Absperrelement (7) mit dem an diesem befestigten expandierbaren Körper (8) in einer rohrförmigen Stütze (9) enthalten ist, deren unteres Ende allmählich in die Form eines Halbzylinders (10) ausläuft, dessen Öffnung, im Betriebszustand, entgegen der Flußrichtung des Fluids in dem Rohr gerichtet ist und der als eine Stütze für den expandierbaren Körper (8) dient, wenn der Körper mit Hilfe des Absperrelements (7) durch die rohrförmige Stütze (9) in das Rohr (1) eingeschoben wird, während der folgenden Expansion des expandierbaren Körpers (8) und während der Blockierung des Flusses der Flüssigkeit durch den Körper.

2. Eine Vorrichtung gemäß Anspruch 1, **dadurch gekennzeichnet,** daß die rohrförmige Stütze (9) aus einem dünnwandigen Rohr besteht, das innerhalb des Verlängerungsabschnitts (12) des Positionierungsgliedes vertikal verschieblich ist, und deren oberer Bereich mit einem Bund (13) versehen ist, der die rohrförmige Stütze (9) im Verhältnis zum Verlängerungsabschnitt (12) in Position hält und an diesen mit einer Schließvorrichtung (14) mit Hilfe einer Schließklammer (15) geklammert wird, die drehbar an dem Verlängerungsabschnitt befestigt ist.

3. Vorrichtung nach Anspruch 2, **dadurch gekennzeichnet,** daß die Schließvorrichtung (14) einen mit einer Feder (19) versehenen Schließzylinder (16) aufweist, dessen Schließbolzen die Stellung des Absperrelements (7) einstellt, indem er in eine Nut (17) eingreift, wenn die rohrförmige Stütze (9) innerhalb des Positionierungsgliedes (2) und des Verlängerungsabschnitts (12) ist, und indem er in eine Ausnehmung (18) eingreift, nachdem das Absperrelement mit dem expandierbaren Körper (8) in das Rohr (1) eingeführt wurde.

4. Vorrichtung gemäß Anspruch 1, **dadurch gekennzeichnet,** daß der Teil der rohrförmigen Stütze (9), der in das Rohr (1) ragt, mit zwei zur Seite verschieblichen Klappen (20a und 20b) versehen ist, die jeweils in zwei Schlitzen (21) gleiten, die in einem 45°-Winkel zu der horizontalen Ebene verlaufen, und jede Klappe geführt wird mittels zweier mit Bund versehenen Stifte, die an der flachen Seite der Stütze befestigt sind, wobei jede Klappe (20a, 20b) mit zwei Aussparungen (23) versehen ist, um die Bewegung der der jeweiligen Klappe entsprechenden Stifte (22) zu ermöglichen, wenn die Klappen in ihre zurückgezogene Position gefahren werden, in welcher sie sich überlappen.

5. Vorrichtung gemäß Anspruch 4, **dadurch gekennzeichnet,** daß das untere Ende der Klappen (20a, 20b) in der zurückgezogenen Stellung eine größere Entfernung von dem unteren Ende der Stange aufweist als die Entfernung, die der vertikalen Höhe der Schlitze (21) entspricht.

## Revendications

1. Un dispositif pour disposer de manière temporaire un corps dilatable (8) à l'intérieur d'un conduit sous pression (1) contenant un fluide en écoulement et comprenant un ensemble de positionnement (2) devant être mis en place sur un conduit à l'emplacement auquel le corps dilatable doit être disposé de manière que soit créé un joint entre la surface du conduit et l'ensemble de positionnement, une partie d'extension (12) de l'ensemble de positionnement étant équipée d'un corps d'étanchéité (4) dont le rôle est de fermer hermétiquement un canal à trou (3) de la partie d'extension lorsqu'un foret ou un organe de blocage (7) a été inséré dans le canal et étant en outre équipé d'un dispositif à vanne (5) pouvant être ouvert par insertion d'un foret où d'un organe de blocage (7), le dispositif à vanne étant automatiquement fermé après retrait du foret ou de l'organe de blocage, le dispositif comprenant l'organe de blocage, caractérisé en ce que l'organe de blocage (7) avec le corps dilatable fixé (8) est enfermé dans un support tubulaire (9) dont la partie inférieure forme graduellement un semi-cylindre (10) dont l'ouverture, en fonctionnement, fait face à l'écoulement de fluide dans le conduit et sert de support pour le corps dilatable (4) lorsque le corps est inséré, à l'aide de l'organe de blocage (7), à travers le support tubulaire (9) dans le conduit (1) pendant la dilatation ultérieure du corps dilatable (8) et pendant le blocage de l'écoulement de fluide par le corps.

2. Un dispositif selon la revendication 1, caractérisé en ce que le support tubulaire (9) est constitué d'un tube à parois minces qui est déplaçable verticalement à l'intérieur de la section d'extension (12) de l'ensemble de positionnement et dont la section supérieure présente un collet (13) qui fixe le tube de support (9) en place par rapport à la partie d'extension (12) et qui est serré à cette dernière par un dispositif de verrouillage (14) à l'aide d'une pince de verrouillage (15) qui est fixée en rotation à la partie d'extension.

3. Un dispositif selon la revendication 2, caractérisé en ce que le dispositif de verrouillage (14) comprend un cylindre de verrouillage (16) chargé par ressort (19), dont le doigt de verrouillage fixe la position de l'organe de blocage (7) en engageant son encoche (17) lorsque le tube de support (9) est à l'intérieur de l'ensemble de positionnement (2) et de la section d'extension (12) et en engageant l'évidement (18) après que l'organe de blocage, avec le corps dilatable (8), a été inséré dans le conduit (1).

4. Un dispositif selon la revendication 1, caractérisé en ce que la partie du support tubulaire (9) qui fait saillie dans le conduit (1) est équipée de deux volets coulissant latéralement (20a et 20b) qui coulissent séparément dans deux fentes (21) faisant un angle de 45° par rapport au plan horizontal, chaque volet dirigé par deux doigts à tête (22), fixés au côté plat de la tige, chaque volet (20a, 20b) présentant deux évidements (23) pour permettre le passage du doigt (22) du volet correspondant lorsque les volets sont déplacés vers la position rétractée dans laquelle ils se chevauchent mutuellement.

5. Un dispositif selon la revendication 4, caractérisé en ce que l'extrémité inférieure des volets (20a, 20b) dans la position rétractée est à une distance, en dessous de l'extrémité inférieure du support tubulaire, supérieure à la distance représentant la hauteur verticale des fentes (21).
